# EUROPÄISCHE PATENTSCHRIFT

(11) **EP 0 849 030 B1**
(45) Veröffentlichungstag und Bekanntmachung des Hinweises auf die Patenterteilung: **02.01.2002**
(21) Anmeldenummer: 97810985.8
(22) Anmeldetag: 16.12.1997
(51) Int. Cl.: B23K 37/04

(54) **Schweisslehre**
Welding table
Gabarit de soudage

(30) Priorität: 20.12.1996 CH 313896
(43) Veröffentlichungstag der Anmeldung: 24.06.1998
(73) Patentinhaber: Crealiz GmbH, 3011 Bern (CH)
(72) Erfinder: Locher, Karl-Ludwig, 3512 Walkringen (CH); Zimmermann, Hans, 3011 Bern (CH)
(74) Vertreter: BOVARD AG - Patentanwälte

(56) Entgegenhaltungen:
- DE-A- 2 219 276
- DE-U- 8 701 884
- PATENT ABSTRACTS OF JAPAN vol. 7, no. 179 (M-234) [1324] , 9.August 1983 & JP 58 081571 A (SHINMEIWA KOGYO K.K.), 16.Mai 1983,

## Beschreibung

Die Erfindung bezieht sich auf eine Schweisslehre wie sie in der DE-A-2219276 dargestellt ist. Diese Vorrichtung besteht aus einem Rahmen mit zwei Führungsschienen an den Seiten des Rahmens zur Führung der Elemente einer Schere zum axialen Verschieben von mit Traversen zu verschweissenden Staketen, wobei die Scherenelemente mit Halterungen für die Staketen verbunden sind, und wobei eine Führungsschiene fest ist und eine bewegbar ist, und Führungen zur Breiteneinstellung für die Traversen. Durch die Wirkung dieser zwei Führungsschienen kann es zu Verkantungen kommen. Ferner bewegen sich die Schienen unsymmetrisch. Das Neue der Erfindung besteht darin, daß in der Mittelachse des Rahmens der Schweisslehre eine Längsführung zur Führung der Elemente einer Schere benutzt wird, und daß Führungen vorgesehen sind zur Höheneinstellung der Traversen.

Bevorzugte Ausführungsbeispiele ergeben sich aus den abhängigen Ansprüchen.

Im folgenden werden anhand der beiliegenden Zeichnung Ausführungsbeispiele der Erfindung sowie deren Verwendung näher beschrieben. Es zeigen
Fig. 1 eine Draufsicht auf die Schweisslehre mit senkrecht zum Rahmen eingespannten Staketen,
Fig. 2 eine Draufsicht auf die Schweisslehre mit schräg zum Rahmen eingespannten Staketen,
Fig. 3 zwei Details von schräg eingespannten Staketen mit auf den Klemmstiften angeordneten Hülsen,
Fig. 4 einen Querschnitt durch die Schweisslehre,
Fig. 5 eine Ansicht zweier Drehteller,
Fig. 6 einen Querschnitt durch die Breiteneinstellung,
Fig. 7 ein Detail der Breiteneinstellung,
Fig. 8 eine Draufsicht auf die Breiten- und Höheneinstellung,
Fig. 9 die Ansicht eines Staketengeländers,
Fig. 10 eine Draufsicht auf ein weiteres Ausführungsbeispiel der Schweisslehre mit schräg zum Rahmen eingespannten Staketen.

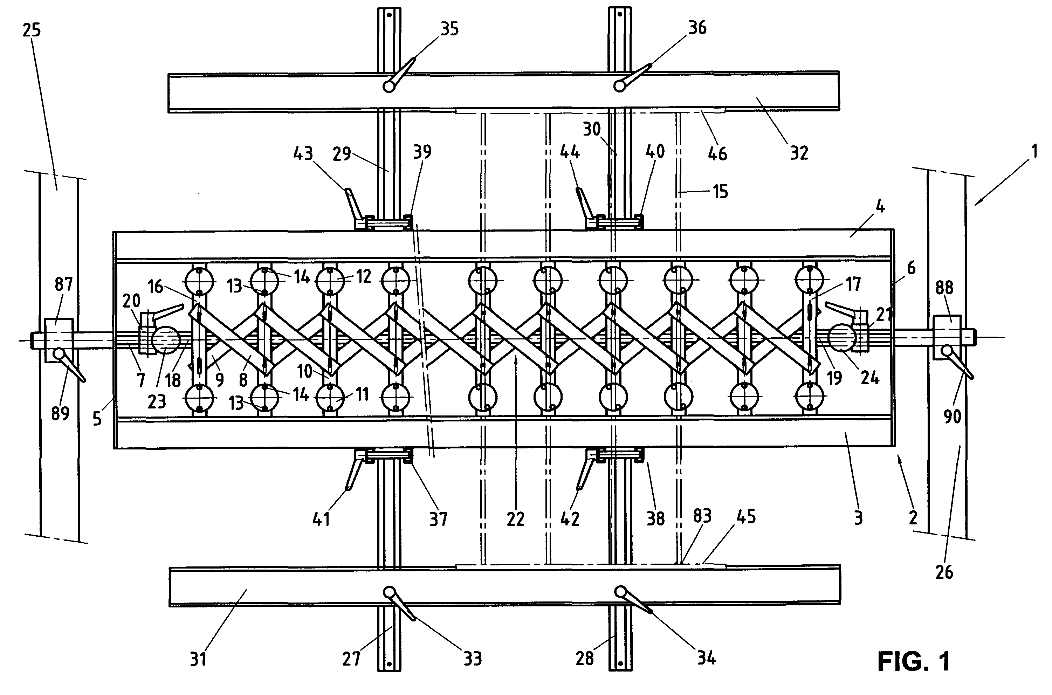

In Fig. 1 ist die Schweisslehre 1 in Draufsicht dargestellt. Ein Rahmen 2 umfasst zwei Längsprofile 3 und 4 sowie zwei Querstreben 5 und 6. In der Mittellängsachse des Rahmens 2 ist eine Längsführung 7 angeordnet. Auf dieser Längsführung 7 sind obere und untere Scherenelemente 8 und 9 längsverschiebbar geführt. Die oberen und unteren Scherenelemente 8, 9 sind beweglich mit Drehtellerhaltern 10 verbunden. An den Enden der Drehtellerhalter 10 ist je ein Drehteller 11, 12 angeordnet. Jeder Drehteller ist mit zwei am Ende eines Durchmessers des Drehtellers angeordneten Klemmstiften 13, 14 versehen. Zwischen die Klemmstifte 13 und 14 zweier Drehteller 11 und 12 wird eine Stakete 15 eingeklemmt. Dazu werden die Drehteller mit den Klemmstiften aus der Ruhelage verdreht. In der Ruhelage liegen die Klemmstifte in der Längsachse der Drehtellerhalter. Die äussersten Drehtellerhalter 16 und 17 sind über einen Ansatz 18 und 19 je mit einer Klemmvorrichtung 20 und 21 zur Befestigung der aus den oberen und unteren Scherenelementen 8 und 9 gebildeten Schere 22 auf der Längsführung 7 versehen. Die Ansätze 18 und 19 weisen einen Betätigungsgriff 23 und 24 auf. An den Griffen kann die Schere 22 auseinandergezogen resp. zusammengestossen werden und mit den Klemmvorrichtungen 20 und 21 an der gewünschten Position auf der Längsführung 7 arretiert werden. Dadurch kann der Abstand der Staketen auf einfache Art und Weise festgelegt werden, wobei dieser kleiner oder grösser gewählte Abstand von Stakete zu Stakete immer konstant bleibt. Die Längsführung 7 ist an ihren Enden drehbar in Büchsen 87 und 88 auf Haltegestellen 25 und 26 gelagert. Mit Klemmhebeln 89, 90 kann die Schweisslehre in der gewünschten verdrehten Lage arretiert werden. Senkrecht zu den Längsprofilen 3 und 4 sind auf der Aussenseite derselben senkrecht zu ihnen je zwei Führungen 27, 28, 29 und 30 für Längsträger 31 und 32 vorgesehen. Die Längsträger 31 und 32 können auf den Führungen 27, 28, 29 und 30 für die Breiteneinstellung verschoben und damit der Länge der Staketen angepasst werden und dienen zur Halterung der Traversen 45, 46. Mit Klemmhebeln 33, 34, 35 und 36 können die Längsträger 31 und 32 auf den Führungen 27, 28, 29 und 30 arretiert werden. In Führungen 37, 38, 39 und 40 zur Höhenverstellung können die Führungen 27, 28, 29 und 30 für die Breiteneinstellung und somit auch die Längsträger 31 und 32 in der Höhe verstellt werden. Die Höhenverstellung dient zur Anpassung der Schweisslehre an die Breite der Staketen. Mit Klemmhebeln 41, 42, 43 und 44 werden die Führungen zur Breiteneinstellung 27, 28, 29 und 30 in den Führungen zur Höheneinstellung 37, 38, 39 und 40 arretiert. Mit 83 ist die Schweissung zwischen Traverse und Stakete bezeichnet.

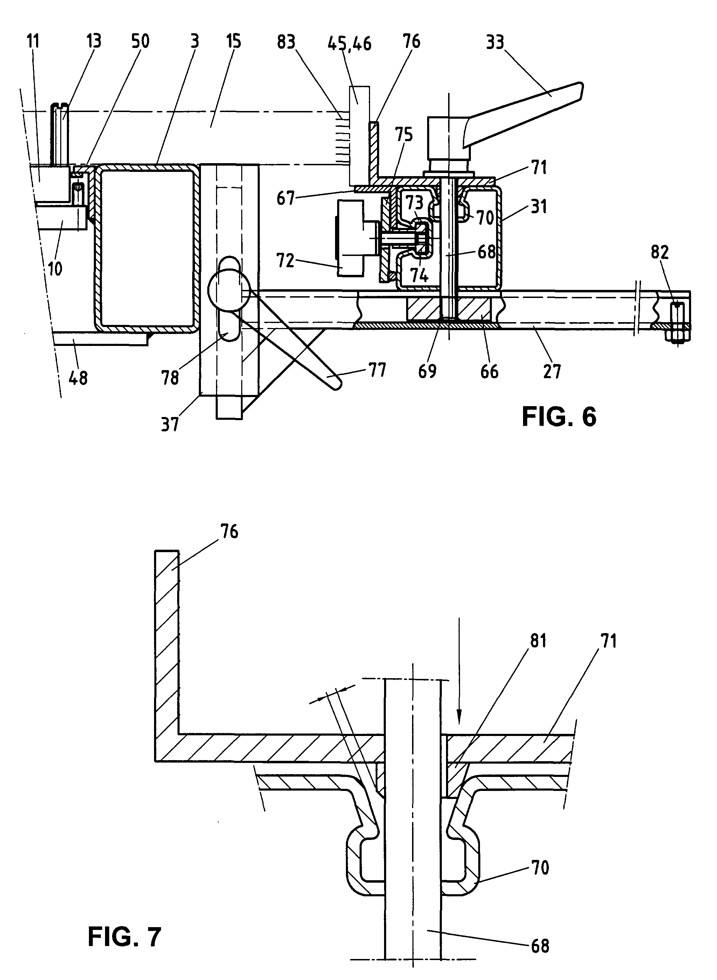

Im folgenden soll das Verfahren zur Verschweissung der Staketen 15 mit den Traversen 45, 46 des herzustellenden Geländes erläutert werden. Die gewünschte Anzahl Staketen 15 werden in die Drehteller 11, 12 eingelegt und durch die Wirkung der in dieser Figur nicht dargestellten Drehfedern zwischen den Klemmstiften 13, 14 zentrisch festgeklemmt. Die Staketenlänge und der Staketendurchmesser können variiert werden. Es folgt eine selbsttätige Ausrichtung der Staketen zu den Längsprofilen 3, 4 im Winkel von 90°. Der Teilungsabstand zwischen den Staketen 15 wird durch Zusammenschieben bzw. Auseinanderziehen der Schere 22 auf einfachste Weise schnell und genau eingestellt. Die beiden Traversen werden in in der Fig. 1 nicht dargestellte Anschlagschienen, die an den Längsträgern 31 und 32 vorgesehen sind, eingelegt und in der Profilbreite auf die Staketen 15 eingemittet. Durch eine Schnellspannung mit den Klemmhebeln 33, 34, 35, 36 und einem Winkelstück gemäss Fig. 7 werden die beiden Traversen 45, 46 an die Staketen 15 angedrückt. Die Profile sind nun in der gewünschten Position fixiert und zur Schweissung vorbereitet. Die Schweisslehre 1 kann in der Längsachse um 360° in die günstigste Arbeitsposition gedreht werden.

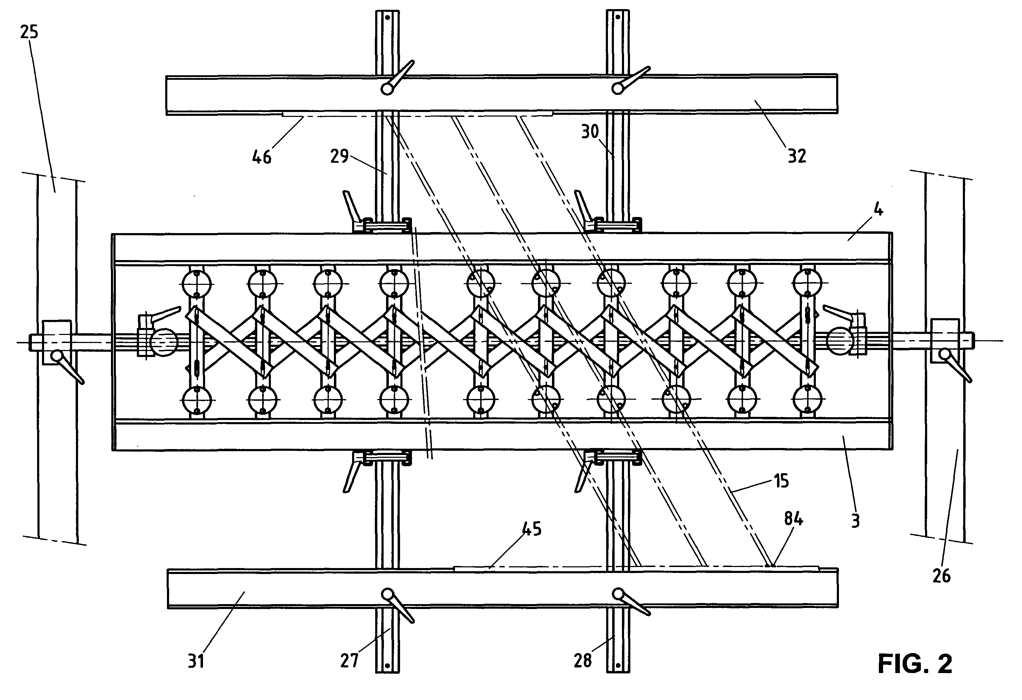

In Fig. 2 ist die Schweisslehre gemäss Fig. 1 dargestellt, wobei jedoch die Staketen 15 schräg zu den Traversen 45 und 46 angeordnet sind. Gleiche Teile wie in Fig. 1 werden mit gleichen Bezugszeichen versehen. Die Staketen gemäss dieser Anordnung sind ebenfalls in den Drehtellern 11 und 12 zwischen den Klemmstiften 13 und 14 eingespannt. Die Staketen werden jedoch nicht in zwei gegenüberliegende Drehteller eingespannt, sondern in einen Drehteller und einen dem gegenüberliegenden Drehteller benachbarten. Durch Zusammenschieben bzw. Auseinanderziehen der Schere wird in diesem Fall sowohl der Abstand als auch die Neigung der Staketen 15 verändert. Die in dieser Figur gezeigte schräge Anordnung der Staketen bezüglich der Traversen findet beispielsweise bei Treppengeländern Anwendung. Mit 84 ist die Schweissung zwischen Traverse und Stakete bezeichnet.

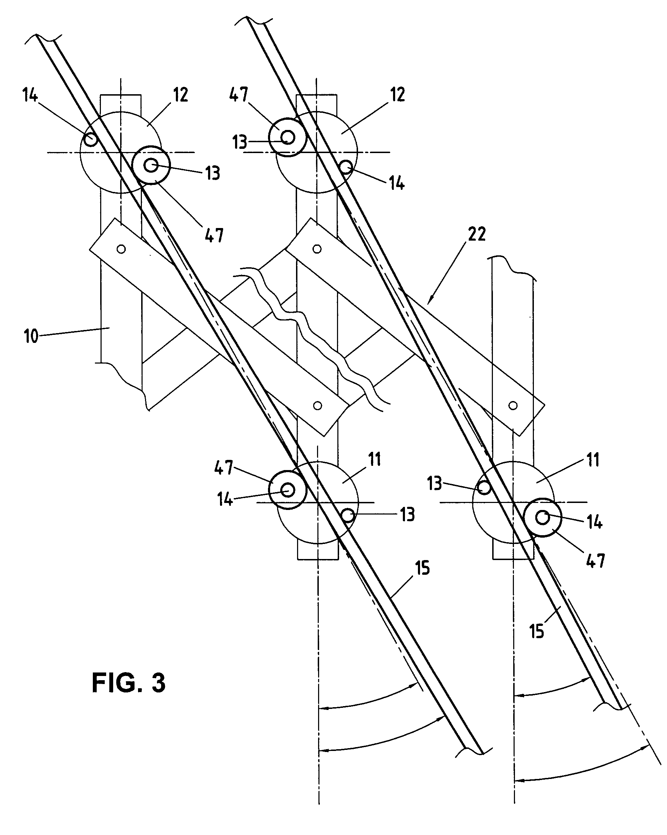

Fig. 3 zeigt zwei Varianten zur Veränderung der schrägen Anordnung der Staketen 15 gemäss Fig. 2 ohne die Schere auseinander zu ziehen oder zusammen zu stossen, bei welcher über die einander zunächstliegenden Klemmstifte 13 und 14 der Drehteller 11 und 12 Hülsen 47 angeordnet sind. Bei der gemäss Fig. 3 linken Stakete ist die Anordnung der Hülsen 47 derart, dass die Stakete einen grösseren Winkel β bezüglich der Längsachse der Drehtellerhalter 10 aufweist als der Winkel α zwischen der Verbindungslinie der Drehtellermitten und der Längsachse der Drehtellerhalter. Bei der gemäss Fig. 3 rechten Stakete ist die Anordnung der Hülsen 47 derart, dass die Stakete einen kleineren Winkel β' bezüglich der Längsachse der Drehtellerhalter 10 aufweist als der Winkel α zwischen der Verbindungslinie der Drehtellermitten und der Längsachse der Drehtellerhalter.

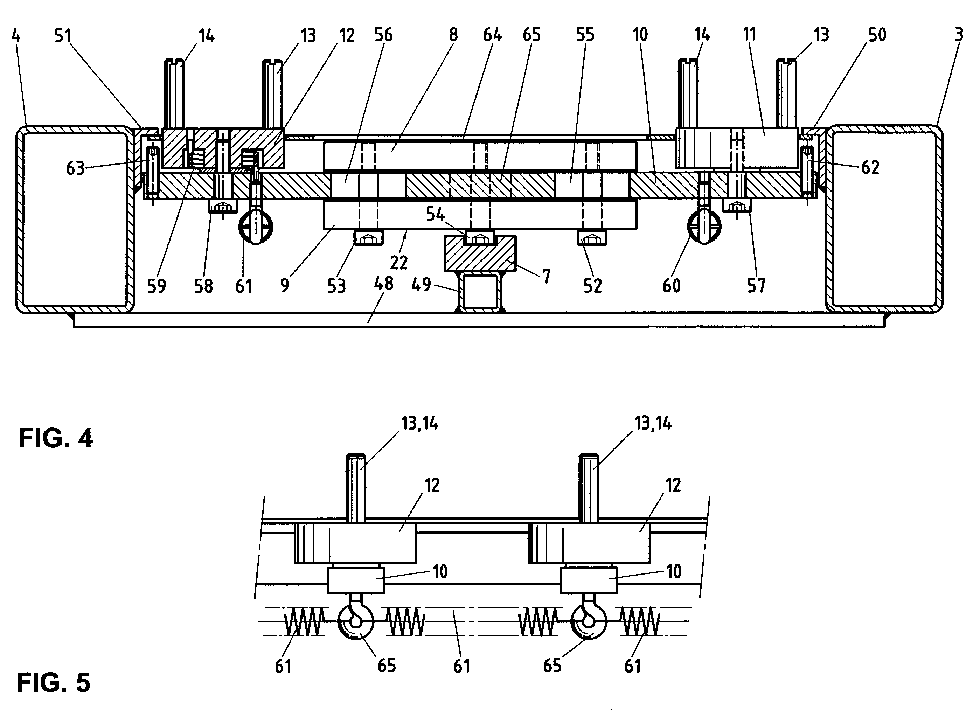

Fig. 4 zeigt einen Querschnitt durch den zentralen Teil der Schweisslehre. Die Längsprofile 3 und 4 sind durch Querverbindungen 48 miteinander verbunden. Auf den Querverbindungen 48 ist ein Längshohlprofil 49 befestigt und auf demselben die Längsführung 7 für die Schere 22. Gegenüber den Querverbindungen 48 sind an den Längsprofilen 3 und 4 auf der Innenseite Höhenanschlagschienen 50 und 51 vorgesehen. An den Verbindungsstellen der oberen und unteren Scherenelemente 8, 9 sind Schaftschrauben 52, 53 vorgesehen. Am Kreuzungspunkt der oberen und unteren Scherenelemente 8, 9 sind ebenfalls Schaftschrauben 54 vorgesehen, die sich ebenfalls durch das oberen und untere Scherenelement erstrecken. Die Schaftschrauben 54 sind in der Längsführung 7 geführt. Der Drehtellerhalter 10 ist im Bereich der Schaftschrauben 52 und 53 mit Schlitzen 55 und 56 versehen, so dass die Scherenelemente beweglich gehalten sind. Die Drehteller 11 und 12 sind mit Schaftschrauben 57 und 58 am Drehtellerhalter 10 befestigt. Im Innern der Drehteller 11 und 12 sind Torsionsfedern 59 vorgesehen, damit die Drehteller mit den Klemmstiften 13 und 14 aus ihrer normalen Lage zum Einlegen der Staketen 15 verdreht werden können. Zwei benachbarte Drehtellerhalter 10 sind jeweils durch eine Ausgleichszugfeder 60, 61 verbunden. Die Drehtellerhalter 10 sind an beiden Längsseiten mit Anschlägen 62 und 63 versehen, damit beim Drehen der Schweisslehre 1 um die Längsführung 7 die Schere 22 mit den Drehtellern 11 und 12 zwischen den Längsprofilen 3 und 4 durch die Höhenanschläge 50 und 51 gehalten wird. Über der Schere 22 ist eine Kunststoffabdeckung 64 vorgesehen.

Fig. 5 zeigt eine teilweise Seitenansicht der Drehteller 12 und der Ausgleichszugfedern 61. Die Ausgleichszugfedern zur Aufhebung des Spiels sind an Ösen 65 befestigt, die ihrerseits an den Drehtellerhaltern 10 angebracht sind.

Fig. 6 zeigt einen Querschnitt durch die Höhen- und Breiteneinstellung der Schweisslehre 1. Der Längsträger 31 ist in der C-förmigen Führung 27 für die Breiteneinstellung mit einem Nutenstein 66 geführt. Der Klemmhebel 33 für die Breiteneinstellung ist mit einem sich senkrecht durch den Längsträger 31 erstreckenden Stab 68 versehen, der an seinem unteren Ende ein Gewinde 69 aufweist. Das Gewinde 69 ist in den Nutenstein 66 eingeschraubt und mit diesem verschweisst. Mit dem Klemmhebel 33 kann der Längsträger 31 in der gewünschten Lage in der Führung 27 für die Breiteneinstellung arretiert werden. Der Stab 68 ist in einer Einbuchtung 70 des Profils des Längsträgers 31 gehalten. Mit dem Klemmhebel 33 wird ebenfalls ein Winkelstück 71 für den Breitenanschlag der Staketen 15 arretiert. Mit einer seitlichen Schraube 72 wird ein winkelförmiger Höhenanschlag 67 aus Messing am Längsträger 31 arretiert. Das Messingprofil 67 verhindert, dass die Traversen 45, 46 an diesem angeschweisst werden. Das Messingprofil kann bei Bedarf leicht ausgewechselt werden. Die Schraube 72 ist in eine in einer seitlichen Einbuchtung 73 des Längsträgers 31 befindlichen Mutter 74 eingeschraubt. Die Schraube 72 drückt eine Unterlagsplatte 75 gegen den Höhenanschlag 67 für die Stakete 15 und hält diesen Anschlag am Längsträger 31 fest. Bei angezogenem Klemmhebel 33 für die Breiteneinstellung wird der senkrechte Teil 76 des Breitenanschlages 71 gegen die Stakete 15 gedrückt und diese wird zwischen zwei gegenüberliegenden Breitenanschlägen 71 eingeklemmt, so dass sie beim Drehen der Schweisslehre nicht aus der Halterung fällt. Mit einem Klemmhebel 77 für die Höheneinstellung der in einem Schlitz 78 der Führung 37 für die Höheneinstellung geführt ist, wird die Führung 27 für die Breiteneinstellung in der Führung 37 für die Höheneinstellung fixiert. Am Ende der Führung 27 für die Breiteneinstellung ist ein Endanschlag 82 vorgesehen.

Fig. 7 zeigt ein Detail der Anordnung des Klemmhebels 33 für die Breiteneinstellung gemäss Fig. 6. Beim Verdrehen des Klemmhebels 33 wird das Winkelstück 71 mit dem an seiner Unterseite angeordneten Keilstück 81 nach links gemäss Fig. 7 gedrückt. Dadurch werden die Traversen 45, 46 gegeneinandergedrückt und spannen die Staketen 15 dazwischen ein, so dass beim Drehen der Schweisslehre die Traversen und Staketen nicht herausfallen können.

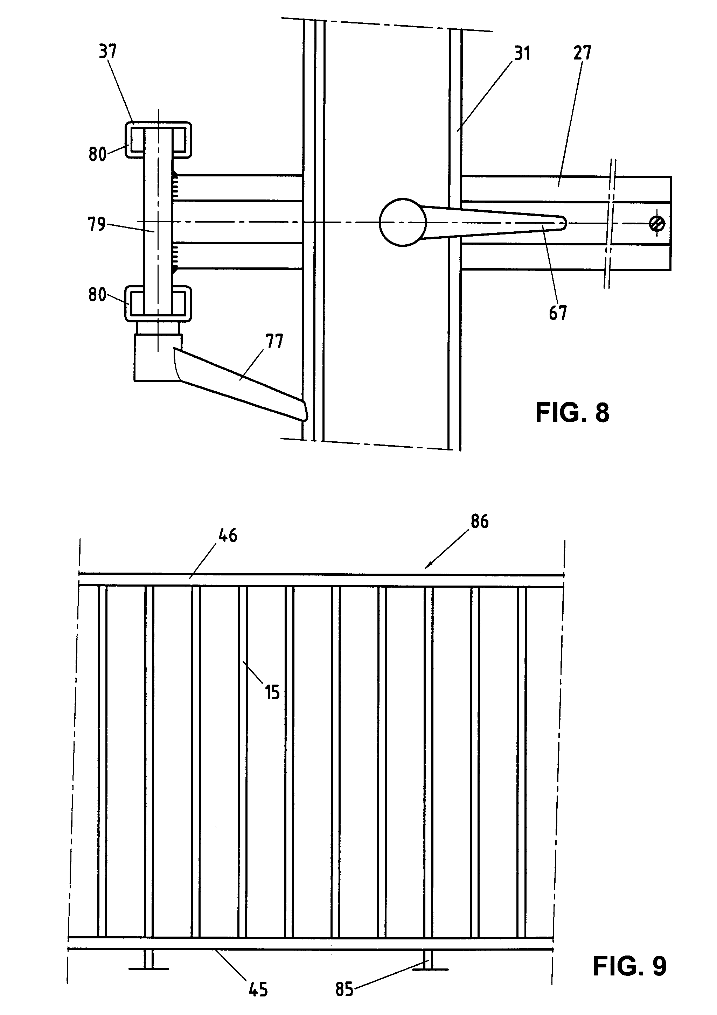

Fig. 8 zeigt eine Draufsicht auf eine Breiten- und Höheneinstellung für die Staketen. Eine mit der Führung 27 für die Breiteneinstellung verbundene Platte 79 ist in zwei C-förmigen Profilen 80 der Führung 37 für die Höheneinstellung geführt. Mit dem Klemmhebel 77 für die Höheneinstellung kann die Führung 27 für die Breiteneinstellung in der Höhe arretiert werden.

Fig. 9 zeigt eine Draufsicht auf ein mit Hilfe der Schweisslehre 1 geschweisstes Staketengeländer 86 mit Staketen 15 und Traversen 45, 46. Das Geländer umfasst noch zusätzlich angeschweisste Ständer 85.

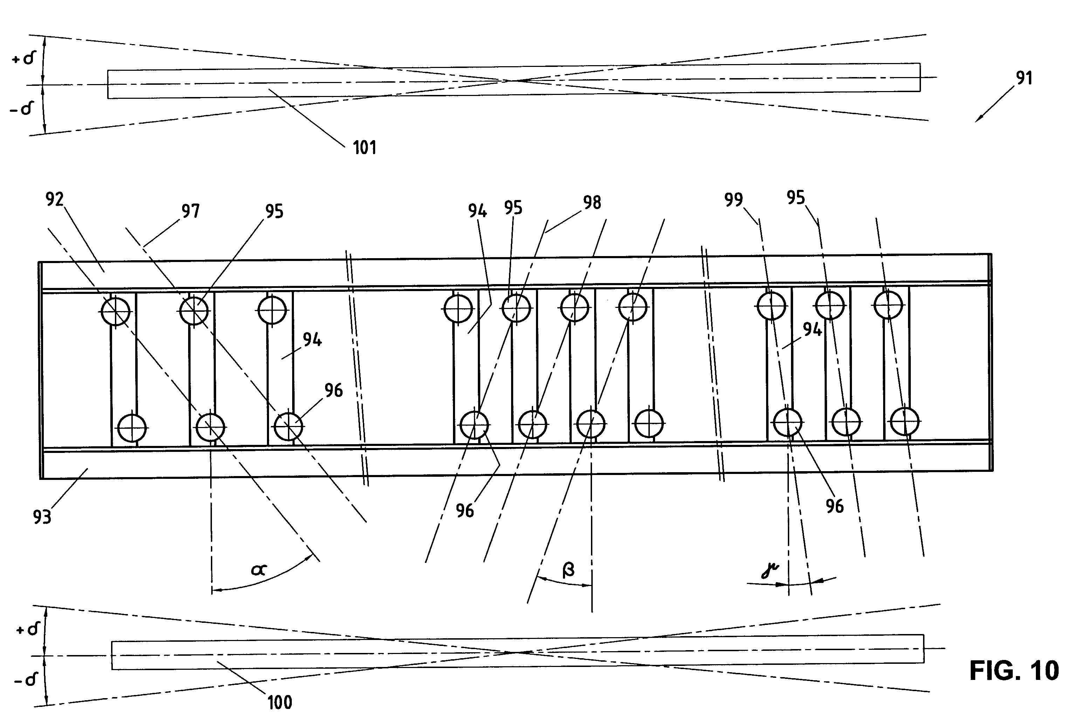

In Fig. 10 ist eine Draufsicht auf ein weiteres Ausführungsbeispiel einer Schweisslehre 91 dargestellt. Diese Figur zeigt lediglich eine schematische Darstellung der Schweisslehre. Zwischen Längsprofilen 92 und 93 sind senkrecht zu diesen Drehtellerhalter 94 angeordnet. Die Drehteller 95 und 96 sind auf diesen Drehtellerhaltern versetzt zur Mittellinie der Drehtellerhalter angeordnet. Es sind drei Möglichkeiten aufgezeigt, wie die Staketen auf den Drehtellern eingespannt werden können. Die einzelnen Staketen werden jeweilen über die ganze Schweisslehre in derselben Richtung eingespannt. Im linken Teil gemäss Fig. 10 sind die Staketen 97 zwischen einem "oberen" Drehteller 95 gemäss Fig. 10 und einem "unteren" Drehteller 96 des nächsten Drehtellerhalters eingespannt. Die Drehteller 95 und 96 liegen auf der entgegengesetzten Seite der Drehtellerhalter 94. Der Winkel α zwischen den Staketen 97 und einer senkrechten, zu den Längsprofilen 92 und 93 beträgt beispielsweise 39°. Im mittleren Teil gemäss Fig. 10 sind die Staketen 98 zwischen den "oberen" Drehtellern 95 und den "unteren" Drehteller 96 zweier benachbarter Drehtellerhalter 94 eingespannt, wobei sich die Drehteller auf gegenüberliegenden Seiten der Drehtellerhalter befinden. Der Winkel β zwischen den Staketen 98 und einer Senkrechten zu den Längsprofilen 92, 93 beträgt beispielsweise 19°. Im rechten Teil gemäss Fig. 10 sind die Staketen 99 zwischen einem "oberen" Drehteller 95 und einem "unteren" Drehteller 96 eines Drehtellerhalters 94 eingespannt. Der Winkel γ zwischen der Stakete 99 und der Senkrechten zu den Längsprofilen 92, 92 beträgt beispielsweise 10°. Die Längsträger 100 und 101 können um den Winkel δ, beispielsweise ± 6°, verkippt werden, so dass der Winkel zwischen den Staketen und den auf den Längsträgern befindlichen Traversen noch um beispielsweise ± 6° variiert werden kann.

## Patentansprüche

1. Schweisslehre (1), **gekennzeichnet durch** einen Rahmen (2), eine in der Mittelachse des Rahmens angeordnete Längsführung (7) zur Führung der Elemente (8, 9) einer Schere (22) zur axialen Verschiebung von mit zweiten Organen (45, 46) zu verschweissenden ersten Organen (15), wobei die Scherenelemente (8, 9) mit Halterungen (10, 11, 12, 16, 17) für die ersten Organe (15) verbunden sind, und **durch** Führungen (27, 28, 29, 30, 37, 38, 39, 40) zur Höhen- und Breiteneinstellung für die zweiten Organe.

2. Schweisslehre nach Patentanspruch 1, **dadurch gekennzeichnet, dass** die Halterungen (10, 11, 12, 16, 17) für die ersten Organe (15) mit den Scherenelementen (8, 9) beweglich verbundene Drehtellerhalter (10, 16, 17) und im Endbereich der Drehtellerhalter angeordnete Drehteller (11, 12) umfassen.

3. Schweisslehre nach Patentanspruch 2, **dadurch gekennzeichnet, dass** auf den Drehtellern (11, 12) Klemmstifte (13, 14) angeordnet sind, und die Drehteller gegen die Kraft einer Feder (59) verdrehbar angeordnet sind.

4. Schweisslehre nach einem der vorangehenden Patentansprüche, **dadurch gekennzeichnet, dass** im Endbereich der Schere (22) mindestens eine Klemmvorrichtung (20, 21) zur Arretierung der Schere an der Längsführung (7) vorgesehen ist.

5. Schweisslehre nach einem der vorangehenden Patentansprüche, **dadurch gekennzeichnet, dass** die Scherenelemente (8, 9) im Endbereich, wo sie sich überlappen und im mittleren Bereiche, wo sie sich kreuzen, durch Befestigungselemente (52, 53, 54) verschwenkbar verbunden sind.

6. Schweisslehre nach Patentanspruch 5, **dadurch gekennzeichnet, dass** die Befestigungselemente (54) im Kreuzungsbereich der Scherenelemente (8, 9) in der Längsführung (7) geführt sind.

7. Schweisslehre nach einem der Patentansprüche 2 bis 6, **dadurch gekennzeichnet, dass** die Drehtellerhalter (10) untereinander durch Federn (61, 62) verbunden sind.

8. Schweisslehre nach einem der Patentansprüche 3 bis 6, **dadurch gekennzeichnet, dass** auf einem der Klemmstifte (13, 14) jedes Drehtellers (11, 12) eine Hülse (47) angeordnet ist.

9. Schweisslehre nach einem der vorangehenden Patentansprüche, **dadurch gekennzeichnet, dass** an Längsprofilen (3, 4) des Rahmens (2) die Führungen (37, 38, 39, 40) für die Höheneinstellung der an Längsträgern (31, 32) lösbar befestigten zweiten Organe (45, 46) vorgesehen sind.

10. Schweisslehre nach Patentanspruch 9, **dadurch gekennzeichnet, dass** in den Führungen (37, 38, 39, 40) für die Höheneinstellung die Führungen (27, 28, 29, 30) für die Breiteneinstellung verschiebbar und arretierbar angeordnet sind.

11. Schweisslehre nach Patentanspruch 9 oder 10, **dadurch gekennzeichnet, dass** die Längsträger (31, 32) verschiebbar und arretierbar in den Führungen (27, 28, 29, 30) für die Breiteneinstellung angeordnet sind.

12. Schweisslehre nach einem der Patentansprüche 2 bis 11, **dadurch gekennzeichnet, dass** die Drehteller (95, 96) auf den Drehtellerhaltern (94) versetzt angeordnet sind.

13. Verwendung der Schweisslehre (1) nach einem der vorangehenden Patentansprüche zur Verschweissung der Staketen (15) mit den Traversen (45, 46) eines Geländers.

## Claims

1. Welding template (1), **characterised by** a frame (2), a longitudinal guide (7), disposed in the central axis of the frame, for guiding the elements (8, 9) of a scissors (22) for axial displacement of first elements (15) to be welded with second elements (45, 46), the scissors elements (8, 9) being connected with holding devices (10, 11, 12, 16, 17) for the first elements (15), and by guides (27, 28, 29, 30, 37, 38, 39, 40) for height and width adjustment for the second elements.

2. Welding template according to claim 1, **characterised in that** the holding devices (10, 11, 12, 16, 17) for the first elements (15) comprise rotary table supports (10, 16, 17) movably connected with the scissors elements (8, 9) and rotary tables (11, 12) disposed in the end region of the rotary table supports.

3. Welding template according to claim 2, **characterised in that** clamping pins (13, 14) are disposed on the rotary tables (11, 12), and the rotary tables are disposed rotatable against the action of a spring (59).

4. Welding template according to one of the preceding claims, **characterised in that** provided in the end region of the scissors (22) is at least one clamping device (20, 21) for stopping the scissors at the longitudinal guide (7).

5. Welding template according to one of the preceding claims, **characterised in that** the scissors elements (8, 9) in the end region, where they overlap, and in the middle region, where they cross, are pivotably connected through fastening means (52, 53, 54).

6. Welding template according to claim 5, **characterised in that** the fastening elements (54) in the crossing region of the scissors elements (8, 9) are guided in the longitudinal guide (7).

7. Welding template according to one of the claims 2 to 6, **characterised in that** the rotary table supports (10) are connected to one another through springs (61, 62).

8. Welding template according to one of the claims 3 to 6, **characterised in that** a collet (47) is disposed on one of the clamping pins (13, 14) of each rotary table (11, 12).

9. Welding template according to one of the preceding claims, **characterised in that** the guides (37, 38, 39, 40) for the height adjustment of the second elements (45, 46), detachably mounted on longitudinal beams (31, 32), are provided on longitudinal sections (3, 4) of the frame (2).

10. Welding template according to claim 9, **characterised in that** the guides (27, 28, 29, 30) for the width adjustment are disposed in a stoppable and displaceable way in the guides (37, 38, 39, 40) for the height adjustment.

11. Welding template according to claim 9 or 10, **characterised in that** the longitudinal beams (31, 32) are disposed in a displaceable and stoppable way in the guides (27, 28, 29, 30) for the width adjustment.

12. Welding template according to one of the claims 2 to 11, **characterised in that** the rotary tables (95, 96) are displaced offset on the rotary table supports (94).

13. Use of the welding template according to one of the preceding claims for welding of posts (15) with the railings (45, 46) of a banister.

## Revendications

1. Gabarit de soudage (1) **caractérisé par** un châssis (2), un guidage longitudinal (7) placé dans l'axe médian du châssis et servant à guider les éléments (8, 9) d'un bras articulé déployable (22) qui sert à déplacer longitudinalement des organes (15) d'un premier groupe devant être soudés à des organes (45, 46) d'un deuxième groupe, les éléments (8, 9) du bras articulé déployable étant reliés à des fixations (10, 11, 12, 16, 17) des organes (15) du premier groupe ainsi que par des guidages (27, 28, 29, 30, 37, 38, 39, 40) de réglage de hauteur et de largeur pour les organes du deuxième groupe.

2. Gabarit de soudage selon la première revendication, **caractérisé en ce que** les fixations (10, 11, 12, 16, 17) des organes (15) du premier groupe comprennent des supports de disques tournants (10, 16, 17) reliés de manière mobile aux éléments (8, 9) du bras articulé déployable ainsi que des disques tournants (11, 12) montés près de l'extrémité des supports de disques tournants.

3. Gabarit de soudage selon la revendication 2, **caractérisé en ce que** des tiges de blocage (13, 14) sont montées sur les disques tournants (11, 12) et que les disques tournants sont montés de façon à pouvoir être tournés en surmontant la force d'un ressort antagoniste (59).

4. Gabarit de soudage selon l'une des revendications précédentes, **caractérisé en ce qu'**au moins un dispositif de blocage (20, 21) se trouve près de l'extrémité du bras articulé déployable (22) pour immobiliser celui-ci sur le guidage longitudinal (7).

5. Gabarit de soudage selon l'une des revendications précédentes, **caractérisé en ce que** les éléments (8, 9) du bras articulé déployable sont reliés par des éléments de fixation (52, 53, 54) de manière à pouvoir pivoter, près de l'extrémité, où ils se chevauchent, et vers le milieu, où ils se croisent.

6. Gabarit de soudage selon la revendication 5, **caractérisé en ce que** les éléments de fixation (54) sont guidés dans le guidage longitudinal (7) dans la zone où se croisent les éléments (8, 9) du bras articulé déployable.

7. Gabarit de soudage selon l'une des revendications 2 à 6, **caractérisé en ce que** les supports (10) des disques tournants sont reliés entre eux par des ressorts (61, 62).

8. Gabarit de soudage selon l'une des revendications 3 à 6, **caractérisé en ce qu'**une douille (47) est placée sur l'une des tiges de blocage (13, 14) de chaque disque tournant (11, 12).

9. Gabarit de soudage selon l'une des revendications précédentes, **caractérisé en ce que** les guidages (37, 38, 39, 40) servant au réglage en hauteur des organes (45, 46) du deuxième groupe fixés de manière amovible à des supports longitudinaux (31, 32) sont montés sur des profilés longitudinaux (3, 4) du châssis (2).

10. Gabarit de soudage selon la revendication 9, **caractérisé en ce que** les guidages (27, 28, 29, 30) servant au réglage en largeur sont montés, de façon à pouvoir être déplacés et bloqués, dans les guidages (37, 38, 39, 40) servant au réglage en hauteur.

11. Gabarit de soudage selon la revendication 9 ou 10, **caractérisé en ce que** les supports longitudinaux (31, 32) sont montés dans les guidages (27, 28, 29, 30) servant au réglage en largeur de façon à pouvoir être déplacés et bloqués.

12. Gabarit de soudage selon l'une des revendications 2 à 11, **caractérisé en ce que** les disques tournants (95, 96) sont disposés en quinconce sur les supports de disques tournants (94).

13. Utilisation du gabarit de soudage (1) selon l'une des revendications précédentes pour souder les barreaux (15) aux traverses (45, 46) d'une balustrade.
